# EUROPEAN PATENT SPECIFICATION

(11) **EP 2 661 373 B1**
(45) Date of publication and mention of the grant of the patent: **31.08.2016**
(21) Application number: 11824320.3
(22) Date of filing: 07.01.2011
(51) Int. Cl.: B41J 2/175, B41J 2/14, F16K 15/14, F16K 17/02

(54) **FLUID CONTAINER HAVING PLURALITY OF CHAMBERS**
FLÜSSIGKEITSBEHÄLTER MIT MEHREREN KAMMERN
RÉCIPIENT DE FLUIDE AYANT UNE PLURALITÉ DE CHAMBRES

(43) Date of publication of application: 13.11.2013
(73) Proprietor: Hewlett-Packard Development Company, L.P., Houston, TX 77070 (US)
(72) Inventor: BOYD, Patrick V., Corvallis Oregon 97330-4239 (US); OLSEN, David, Corvallis Oregon 97330-4239 (US); STATHEM, Ralph, Corvallis Oregon 97330-4239 (US)
(74) Representative: Zimmermann, Tankred Klaus
(86) International application number: PCT/US2011/020521
(87) International publication number: WO 2012/094018

(56) References cited:
- EP-A1- 1 464 502
- EP-A1- 1 464 502
- EP-A2- 1 287 999
- EP-A2- 1 287 999
- WO-A1-2005/075205
- WO-A1-2005/075205
- WO-A1-2009/049347
- WO-A1-2009/049347
- US-A- 5 737 001
- US-A- 5 737 001
- US-A- 6 145 974
- US-A1- 2002 109 760
- US-A1- 2003 122 907
- US-A1- 2003 122 907
- US-A1- 2008 266 370
- US-A1- 2008 266 370
- US-A1- 2009 096 849
- US-A1- 2009 096 849
- US-B1- 6 203 148
- US-B2- 7 445 323

## Description

### BACKGROUND

Fluid containers store fluid to be supplied to other devices. Fluid containers may include multiple chambers and be removably installed in devices such as image forming apparatuses to supply the fluid thereto. Such fluid containers may be available in a variety of fluid storage capacities.

US 2009/0096849 discloses a removable inkjet carbridge comprising a housing unit, a regulated chamber a vent valve and a wet flow check valve.

### BRIEF DESCRIPTION OF THE DRAWINGS

Non-limiting examples of the present disclosure are described in the following description, read with reference to the figures attached hereto and do not limit the scope of the claims. In the figures, identical and similar structures, elements or parts thereof that appear in more than one figure are generally labeled with the same or similar references in the figures in which they appear. Dimensions of components and features illustrated in the figures are chosen primarily for convenience and clarity of presentation and are not necessarily to scale. Referring to the attached figures:
FIG. 1 is a block diagram illustrating a fluid container according to an example.
FIG. 2 is a perspective view illustrating a fluid container according to an example.
FIGS. 3 and 4 are perspective views illustrating a check valve of the fluid container of FIG. 1 according to examples.
FIGS. 5A to 5E are perspective views of various stages of the fluid container of FIG. 1 according to examples.
FIG. 6 is a cross-sectional view of the fluid container of FIG. 1 in an installed state according to an example.
FIG. 7 is a block diagram illustrating a fluid container according to an example.
FIG. 8 is a block diagram illustrating a fluid container including an integrated multifunctional valve device according to an example.
FIG. 9 is a perspective view illustrating an integrated multifunctional valve device in a disassembled form according to an example.
FIGS. 10A-10C are cross-sectional views illustrating the integrated multifunctional valve device of FIG. 9 in an assembled form according to examples.
FIG. 11A, 11B and 11C are chart representational views illustrating states of a regulated chamber of a fluid container according to examples.

Throughout the drawings, identical reference numbers designate similar, but not necessarily identical, elements.

### DETAILED DESCRIPTION

In the following detailed description, reference is made to the accompanying drawings which form a part hereof, and in which is illustrated by way of illustration specific examples in which the present disclosure may be practiced. It is to be understood that other examples may be utilized and structural or logical changes may be made without departing from the scope of the present disclosure. The following detailed description, therefore, is not to be taken in a limiting sense, and the scope of the present disclosure is defined by the appended claims.

Fluid containers store fluid to be supplied to other devices and are available in a variety of fluid storage capacities. Fluid containers may also be removably installed in devices such as image forming apparatuses to supply the fluid thereto. The fluid containers may include multiple chambers to store fluid therein. The fluid containers may include regulator units to regulate the flow of fluid within and/or between the fluid container and, for example, the image forming apparatus. At times, however, fluid may be stranded in one or more of the chambers. Thus, fluid containers may be provided with active sequencing instructions, for example, from the respective image forming apparatus to control the flow of fluid. Active sequencing instructions, for example, may actively control valves to reduce a potential amount of fluid from being stranded in one or more of the chambers. Generally, however, such fluid containers controlling the flow of fluid by receiving active sequencing instructions include an increased number of parts and cost thereto.

The present disclosure discloses fluid containers having multiple fluid storage chambers including a regulated chamber and a free-fluid chamber. The regulated chamber includes a regulator unit configured to regulate respective fluid and an outlet configured to transport the respective fluid outside of the housing unit. In examples, the fluid container includes a fluid channel and a check valve. The fluid channel is configured to selectively establish fluid communication between ambient atmosphere and the free-fluid chamber. The check valve is configured to selectively establish fluid communication between the free-fluid chamber and the regulated chamber. In examples, the free-fluid chamber reaches an exhaustion state before the regulated chamber reaches the exhaustion state through passive sequencing therein. Thus, the fluid containers of the present disclosure reduce the potential amount of stranded fluid in the respective fluid storage chambers through passive sequencing. That is, in examples, the fluid containers do not require active sequencing instructions to control the flow of fluid, for example, from the respective image forming apparatus. Accordingly, the fluid containers may include a reduced number of parts and cost thereto.

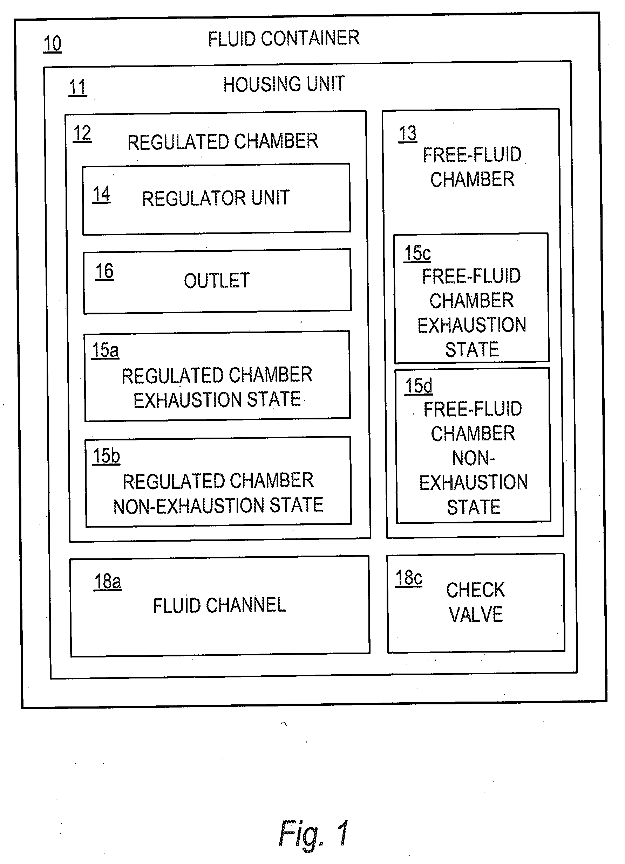

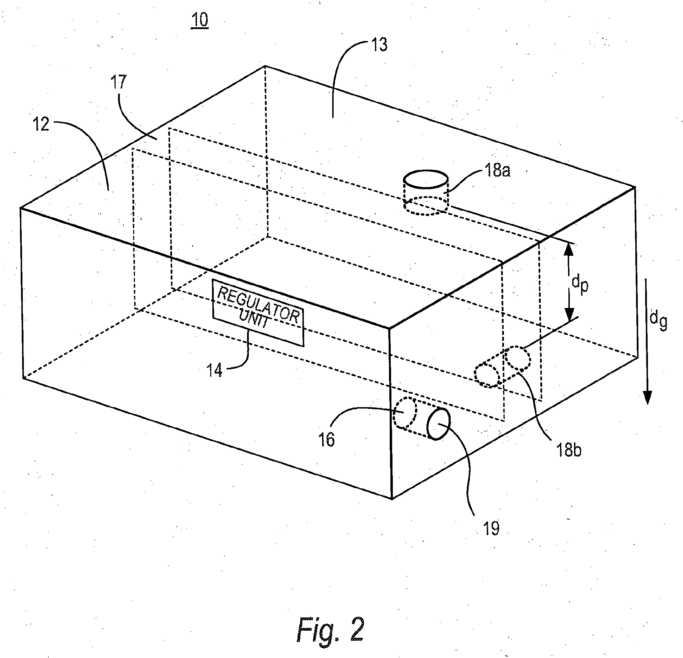

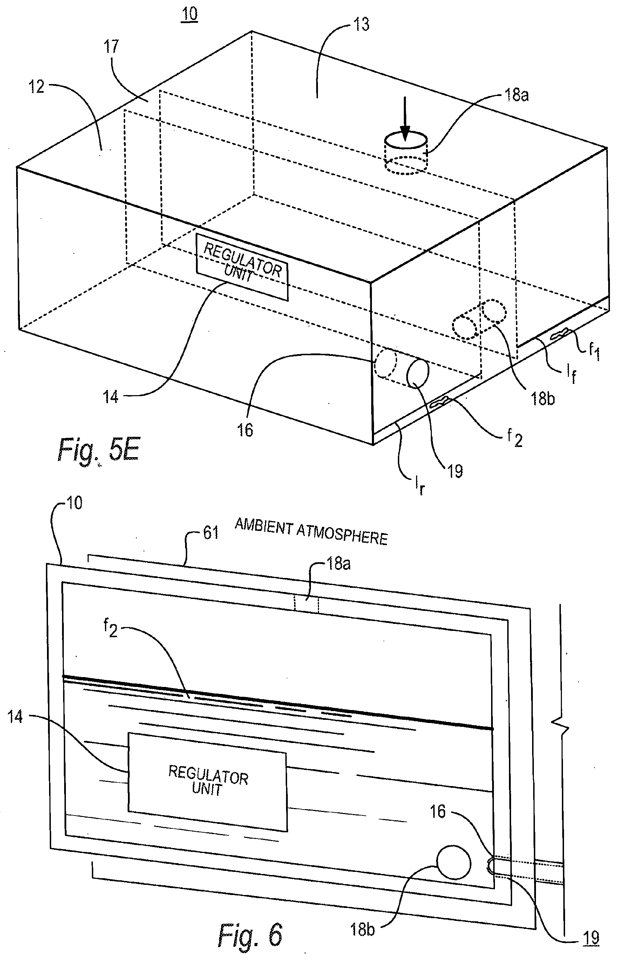

FIG. 1 is a block diagram illustrating a fluid container according to an example. FIG. 2 is a perspective view illustrating a fluid container according to an example. The fluid container 10 may be usable with an image forming apparatus (not illustrated) having a fluid container receiver 61 (FIG. 6). Referring to FIGS. 1 and 2, in the present example, the fluid container 10 includes a housing unit 11 including a free-fluid chamber 13 to store a first fluid f₁ and a regulated chamber 12 to store a second fluid f₂. In an example, the free-fluid chamber 13 and the regulated chamber 12 may be adjacent to each other and separated by a common wall 17. The regulated chamber 12 includes a regulator unit 14 and an outlet 16. The regulator unit 14 is configured to regulate the second fluid f₂. The regulator unit 14 may include one or more of a pump, a biasing mechanism, a spring, a variable-volume chamber and an expansion and contraction member, or the like.

In an example, the regulated chamber 12 may include a regulated chamber exhaustion state 15a and a regulated chamber non-exhaustion state 15b. The free-fluid chamber 13 may include a free-fluid chamber exhaustion state 15c and a free-fluid chamber non-exhaustion state 15d. The respective exhaustion states 15a and 15c, for example, may be a state in which the respective chamber 12 and 13 is substantially exhausted of the respective fluid f₂ and f₁ and/or a predetermined amount of the respective fluid f₂ and f₁ has been depleted from the respective chamber 12 and 13. The respective non-exhaustion states 15b and 15d, for example, may be a state in which the respective chamber 12 and 13 is not substantially exhausted of the respective fluid f₂ and f₁ and/or a predetermined amount of the respective fluid f₂ and f₁ has not been depleted from the respective chamber 12 and 13. For example, the respective fluids f₂ and f₁ are above the respective exhaustion lines lᵣ and l_{f}.

Referring to FIGS. 1 and 2, the outlet 16 is configured to transport the second fluid f₂ outside of the housing unit 11. For example, the outlet 16 may transport the second fluid f₂ to a fluid detector chamber (not illustrated) and/or a fluid applicator assembly (not illustrated), or the like. In an example, the fluid applicator assembly may be a print head assembly. The housing unit 11 may also include one or more exterior openings 19 such as fluid interconnects, or the like, to establish communication between a respective fluid chamber and the external environment such as an image forming apparatus and /or ambient atmosphere.

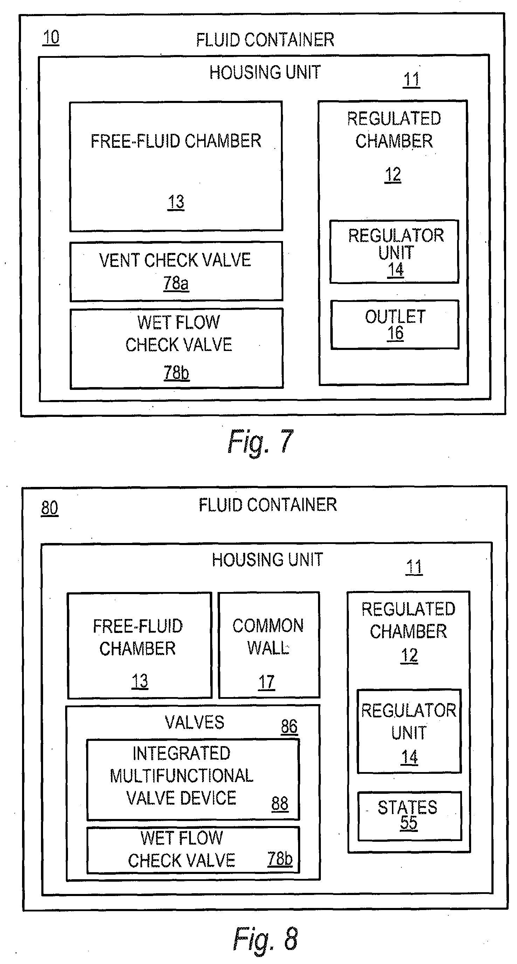

Referring to FIGS. 1 and 2, in the present example, the fluid container 10 also includes a fluid channel 18a and a check valve 18b. In the present example, the fluid channel 18a is configured to establish fluid communication between ambient atmosphere and the free-fluid chamber 13. In an example, the fluid channel 18a may include at least a vent check valve 78a (FIG. 7) configured to selectively transport air from ambient atmosphere to the free-fluid chamber 13. In examples, the fluid channel 18a may include a plurality of valves and/or an opening. The check valve 18b is configured to establish fluid communication between the free-fluid chamber 13 and the regulated chamber 12.

In an example, the fluid channel 18a is disposed on an upper portion of the housing unit 11 such as a top portion and the check valve 18b is disposed below the fluid channel 18a such as at a lower portion of the common wall 17 by a predetermined distance dₚ with respect to a gravitational direction d_{g}. The gravitational direction d_{g} may be directed from a top portion of the housing unit 11 towards a bottom portion of the housing unit 11. In other examples, the common wall 17 includes at least one of the fluid channel 18a and the check valve 18b such that the check valve 18b is disposed below the fluid channel 18a by the predetermined distance dₚ with respect to the gravitational direction dg.

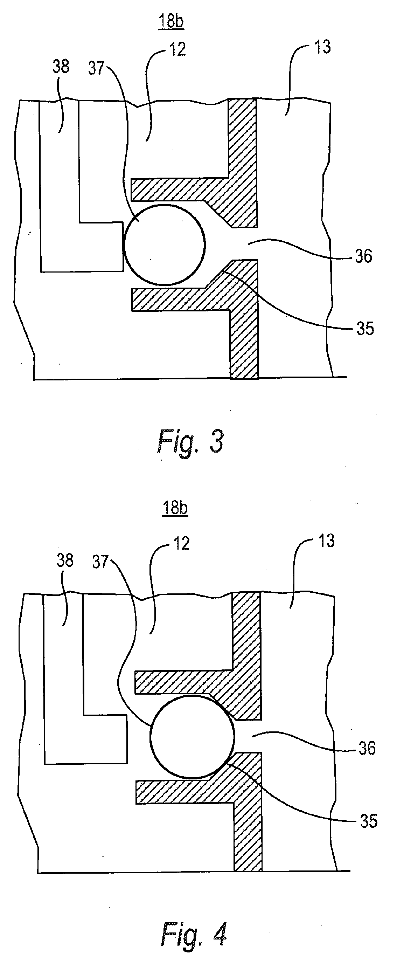

FIGS. 3 and 4 are perspective views illustrating a check valve of the fluid container of FIG. 1 according to examples. The check valve 18b may include a check ball 37, a port 36, a seat 35 surrounding the port 36, and a stopper 38. FIG. 3 illustrates the check valve 18b in an open state. That is, pressure in the free-fluid chamber 13 is greater than pressure in the regulated chamber 12 causing the check ball 37 to move away from the seat 35 and the port 36 toward the stopper 38. Alternatively, FIG. 4 illustrates the check valve 18b in a closed state. That is, pressure in the regulated chamber 12 is greater than pressure in the free-fluid chamber 13 causing the check ball 37 to move against the seat 35 and the port 36 from the stopper 38.

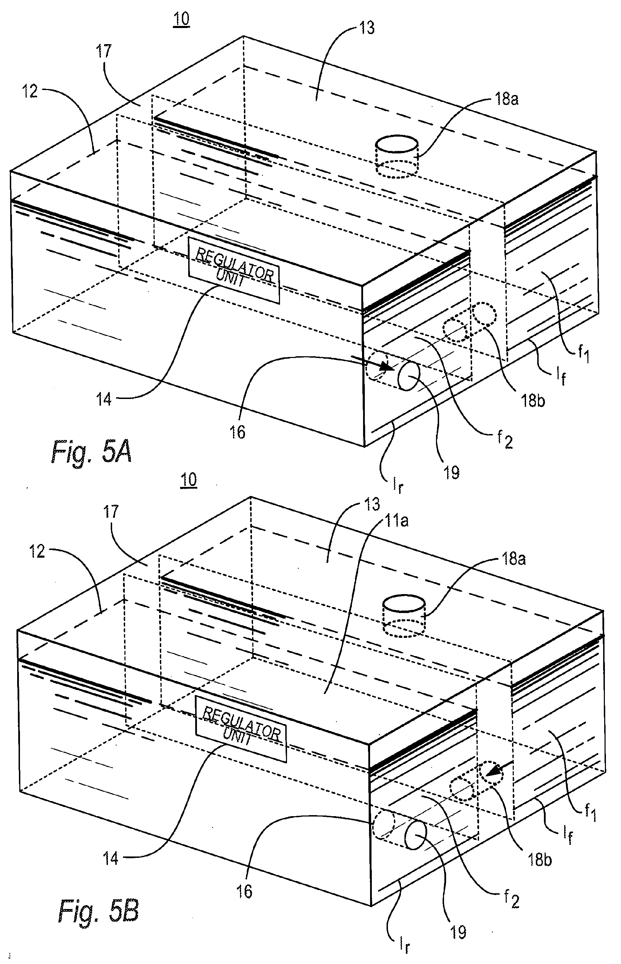

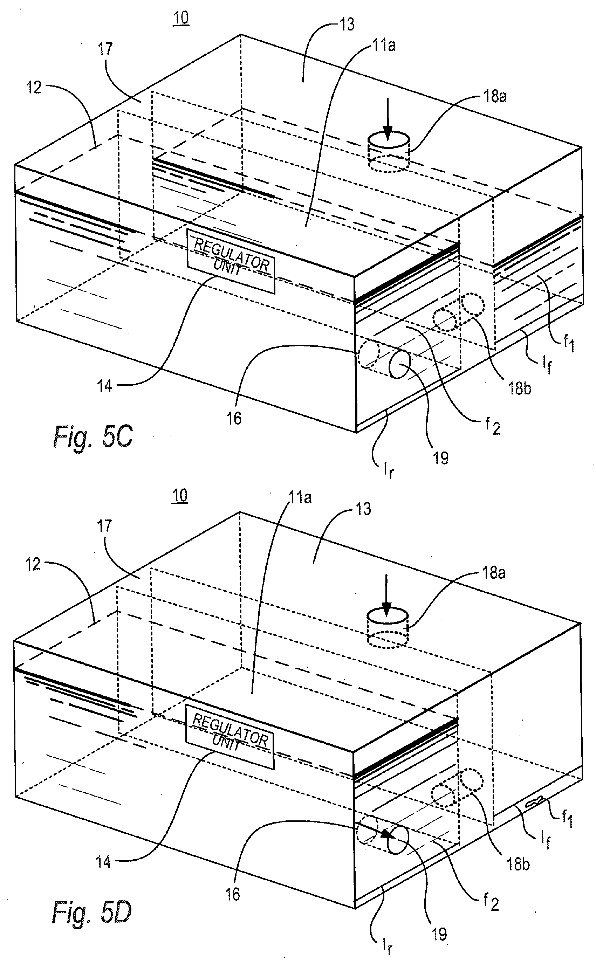

FIGS. 5A to 5E are perspective views of various stages of the fluid container of FIG. 1 according to examples. In FIGS. 5A-5C, both the regulated chamber12 and the free-fluid chamber 13 are in a respective non-exhaustion state (15b and 15d). In FIG. 5E, both the regulated chamber12 and the free-fluid chamber 13 are in a respective exhaustion state (15a and 15c). Referring to FIGS. 5A to 5E, in the present example, the free-fluid chamber 13 reaches a respective exhaustion state 15c (FIG. 5D) before the regulated chamber 12 reaches a respective exhaustion state 15a (FIG. 5E). The exhaustion state is a state in which a respective chamber is substantially exhausted of a particular fluid. For example, a chamber may be considered substantially exhausted of the particular fluid when the respective chamber contains an amount of the particular fluid of no more than five percent of the fluid storage capacity of the respective chamber.

In FIGS. 5A-5E, respective exhaustion lines lᵣ and l_{f} are indicated with respect to the regulated chamber 12 and the free-fluid chamber 13, respectively, for illustrative purposes. In the present example, the free-fluid chamber 13 reaches the free-fluid chamber exhaustion state 15c (FIG. 5D) before the regulated chamber 12 reaches the regulated chamber exhaustion state 15a (FIG. 5E) through passive sequencing therein. That is, the respective valve and/or valves do not require active sequencing instructions from the respective image forming apparatus in order to transport the respective fluid f₁ from the free-fluid chamber 13 to the regulated chamber 12.

Thus, in the regulated chamber 12, the second fluid f₂ remains above the respective exhaustion line lᵣ at least until, in the free-fluid chamber 13, the first fluid f₁ falls below the respective exhaustion line l_{f}. Thus, the fluid container 10 reduces a potential amount of stranded fluid in the respective chambers 12 and 13. In the present example, the particular fluid of the free-fluid chamber 13 is the first fluid f₁ and the particular fluid of the regulated chamber 12 is the second fluid f₂. In an example, each of the first fluid f₁ and second fluid f₂ may be ink, or the like. In other examples, the first fluid f₁ and second fluid f₂ may be liquids other than ink.

As an example, if the fluid storage capacity of the regulated chamber 12 is 48 cubic centimeters (cc), the respective exhaustion state (e.g., regulated chamber exhaustion state 15a) of the regulated chamber 12 is when no more than 4.8 cc of a second fluid f₂ remains therein. If the fluid storage capacity of the free-fluid chamber 13 is 70 cc, the corresponding exhaustion state (e.g., free-fluid chamber exhaustion state 15c) of the free-fluid chamber 13 is when no more than 7.0 cc of the first fluid f₁ remains therein. Thus, in this example, an amount of the second fluid f₂ remaining in the regulated chamber 12 must be greater than 4.8 cc at least until the first fluid f₁ remaining in the free-fluid chamber 13 is 7.0 cc or less.

In an example, in response to second fluid f₂ being transported from the regulated chamber 12 to outside of the housing unit 11 by the outlet 16 (FIG. 5A), the first fluid f₁ is transported from the free-fluid chamber 13 through the check valve 18b to the regulated chamber 12 (FIG. 5B). Consequently, in response to the first fluid f₁ being transported from the free-fluid chamber 13 to the regulated chamber 12 (FIG. 5B), air is transported from the ambient atmosphere through the fluid channel 18a to the free-fluid chamber 13 (FIG. 5C). Further, the check valve 18b may be configured to selectively transport the first fluid f₁ from the free-fluid chamber 13 to the regulated chamber 12 in response to a pressure differential therebetween. That is, in an example, the check valve 18b is in an open state when pressure in the free-fluid chamber 13 is greater than pressure in the regulated chamber 12 resulting in the first fluid f₁ being transported through the check valve 18b and into the regulated chamber 12.

FIG. 6 is a cross-sectional view of the fluid container of FIG. 1 in an installed state according to an example. Referring to FIG. 6, in the present example, the fluid container 10 may include an installed state. In the installed state, the housing unit 11 is inserted into the fluid container receiver 61 of the image forming apparatus and the fluid channel 18a communicating with ambient atmosphere. For example, the fluid container 10 may include a removable inkjet cartridge including a regulated chamber 12 and a free-ink chamber to store ink. The housing unit 11 is configured to be received by the fluid container receiver 61 of the image forming apparatus in a manner in which the second fluid f₂ in the regulated chamber 12 is directed toward the check valve 18b. For example, a floor portion 11a (FIG. 5B) of the free-fluid chamber 13 may be sloped towards the check valve 18b.

FIG. 7 is a block diagram illustrating a fluid container according to an example. The fluid container 10 may be usable with an image forming apparatus having a fluid container receiver 61 (FIG. 6). Referring to FIG. 7, in the present example, the fluid container 10 includes a housing unit 11, a free-fluid chamber 13 disposed within the housing unit 11 configured to store a first fluid f₁, and a regulated chamber 12 disposed within the housing unit 11 configured to store a second fluid f₂. The regulated chamber 12 includes a regulator unit 14 configured to regulate the second fluid f₂ and an outlet 16 configured to transport the second fluid f₂ from the regulated chamber 12 to outside of the housing unit 11. The fluid container 10 also includes a vent check valve 78a and a wet flow check valve 78b.

The vent check valve 78a is configured to selectively transport air between ambient atmosphere and the free-fluid chamber 13. The wet flow check valve 78b is configured to selectively transport the first fluid f₁ from the free-fluid chamber 13 to the regulated chamber 12. The wet flow check valve 78b, for example, may include a ball-seat check valve. In an example, the second fluid f₂ is transported through the outlet 16 to the outside of the housing unit 11, for example, to a print head assembly to be ejected onto a media. As a result, the first fluid f₁ is transported from the free-fluid chamber 13 through the wet flow check valve 78b to the regulated chamber 12. Further, in response to the first fluid f₁ being transported into the regulated chamber 12, the vent check valve 78a transports the air into the free-fluid chamber 13 to occupy space previously occupied by the first fluid f₁. The free-fluid chamber 13 of FIG. 7 may also reach the free-fluid chamber exhaustion state 15c before the regulated chamber 12 reaches the regulated chamber exhaustion state 15a through passive sequencing therein and include an installed state as previously described with reference to the fluid container 10 illustrated in FIGS. 1-6.

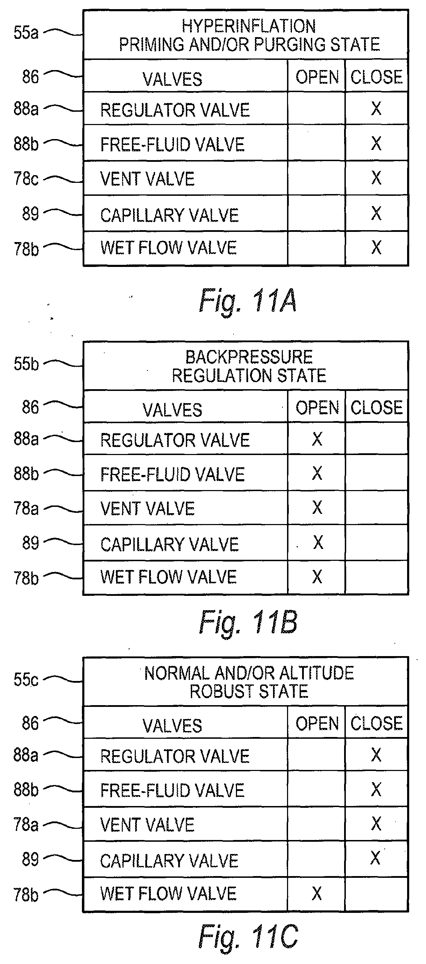

FIG. 8 is a block diagram illustrating a fluid container including an integrated multifunctional valve device according to an example. The fluid container 80 of FIG. 8 corresponds to the fluid container 10 previously described with respect to FIG. 1. Referring to FIG. 8, the fluid container 80 includes valves 86 including an integrated multifunctional valve device 88 and a wet flow check valve 78b. In an example, the integrated multifunctional valve device 88 and the wet flow check valve 78b of the fluid container 80 of FIG. 8 may correspond with the fluid channel 18a and the check valve 18b, respectively, of the fluid container of FIG. 1. In the present example, each of the integrated multifunctional valve device 88 and the wet flow check valve 78b selectively isolate the free-fluid chamber 13 and the regulated chamber 12. That is, fluid communication is selectively stopped between the free-fluid chamber 13 and the regulated chamber 12. The regulated chamber 12 of the fluid container 80 may also include a plurality of states 15 such as a hyperinflation priming and/or purging state 55a (FIG. 11A), a backpressure regulation state 55b (FIG. 11B), and a normal and/or altitude robust state 55c (FIG. 11 C).

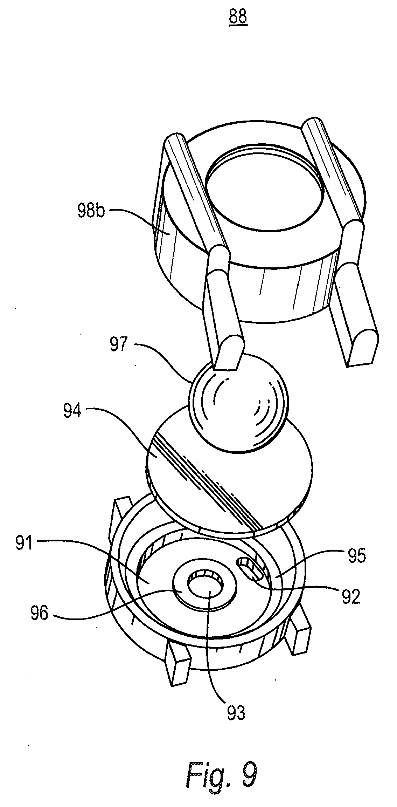

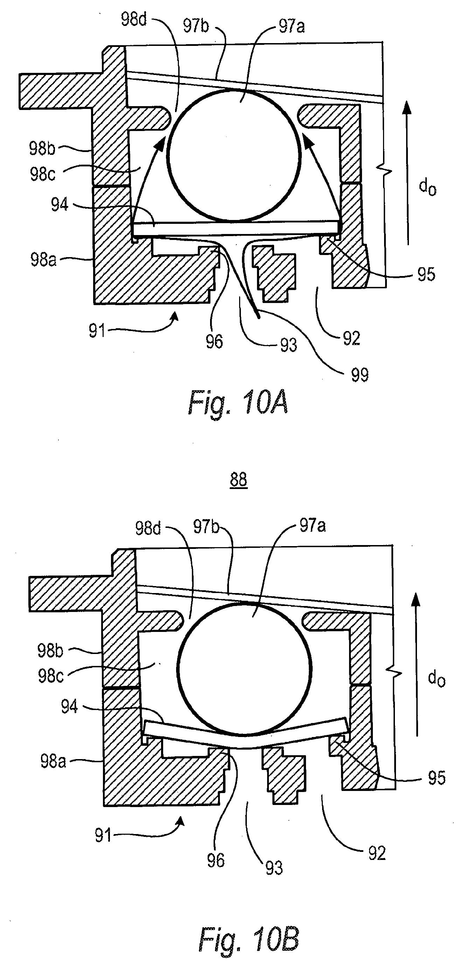

FIG. 9 is a perspective view illustrating an integrated multifunctional valve device in a disassembled form according to an example. FIGS. 10A-10C are cross-sectional views illustrating the integrated multifunctional valve device of FIG. 9 in an assembled form according to examples. The integrated multifunctional valve device 88 may be usable with a fluid container 80, for example, to direct fluid to, from and/or within the fluid container 80. Referring to FIGS. 9 and 10A-10C, in the present example, the integrated multifunctional valve device 88 may include a surface member 91 having a first port 92 and a second port 93 formed therein, a flexible disk member 94, a first seat member 95 extending outward from the surface member 91, a second seat member 96 extending outward from the surface member 91 and an actuator member 97.

The outward direction do, for example, is a direction substantially perpendicular to and away from a surface portion of the surface member 91 in which the respective ports (92 and 93) and are formed. In the present example, the surface member 91 may be a portion of the fluid container 80 such as a housing portion and/or wall portion thereof. In other examples, the surface member 91 may be separate and attachable to the fluid container 80. In an example, the fluid container 80 may also include a first housing member 98a, a second housing member 98b, and a capillary path 99. The first housing member 98a and the second housing member 98b form an enclosed chamber 98c therebetween.

Referring to FIGS. 9 and 10A-10C, the first housing member 98a may extend outward from the surface member 91 to surround the first port 92, the second port 93, the first seat member 95, the second seat member 96 and the flexible disk member 94. In an example, the first housing member 98a and the surface member 91 may be a unitary member. In other examples, the first housing member 98a may be formed separately, disposed opposite and/or coupled to the surface member 91, for example, through positioning components (not illustrated), adhesives, friction-fit arrangement, or the like. In examples, the second housing member 98b may be permanently or removably coupled to the first housing member 98a. The second housing member 98b includes an access opening 98d to provide access to inside and outside of the enclosed chamber 98c.

Referring to FIGS. 9 and 10A-10C, in the present example, the integrated multifunctional valve device 88 includes an integrated regulator valve 88a (FIGS. 11A-11C), a first pressure-actuated valve such as a free-fluid valve 88b (FIGS. 11A-11C) and a second pressure-actuated valve such as a vent valve 78a (FIGS. 11A-11C). The regulator valve 88a includes an actuator member such as the lever member 97b and an actuator ball 97a, the flexible disk member 94, the first seat member 95, the second seat member 96, the first port 92 and the second port 93. The regulator valve 88a has an open state corresponding to the open port position of the flexible disk member 94 and a closed state corresponding to the close port position of the flexible disk member 94. In the open port position, the flexible disk member 94 moves away from the second seat member 96. That is, the flexible disk member 94 moves away from the respective port 93. Thus, in the open state, the regulator valve 88a establishes fluid communication between the first port 92 and the second port 93. In the close port position, the flexible disk member 94 is urged against and extends across the first seat member 95 and the second seat member 96. That is, the flexible disk member 94 is urged towards the respective port 93. Thus, in the closed state, the regulator valve 88a stops the fluid communication between the first port 92 and the second port 93.

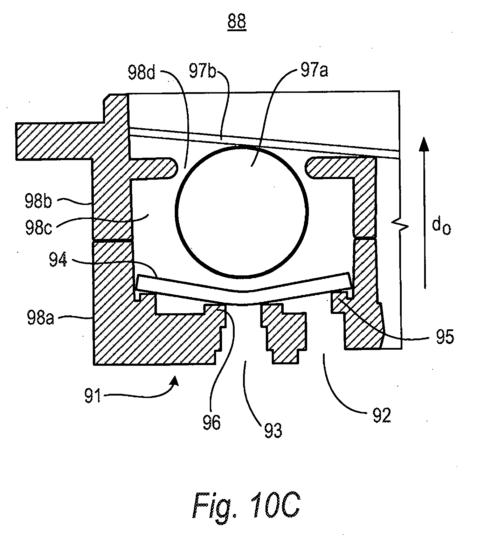

Referring to FIGS 9 and 10A, in the present example, the integrated multifunctional valve device 88 includes the flexible disk member 94, the first seat member 95, the second seat member 96 and the first port 92 to form a first pressure-actuated valve corresponding to the open state of the regulator valve 88a. The flexible disk member 94, the second seat member 96 and the second port 93 form a second pressure-actuated valve corresponding to the open state of the regulator valve 88a. That is, adequate pressure may urge at least a portion of the flexible disk member 94 against the second seat member 96 thereby covering the second port 93, even when the lever member 97b and actuator ball 97a do not move at least a portion of the flexible disk member 94 into the close port position (FIG. 10C).

The free-fluid valve 88b may be configured to selectively transport air from the vent valve 78a into the free-fluid chamber 13. The vent valve 78a may be configured to selectively transport air from ambient atmosphere to the free-fluid valve 88b. In examples, one or more of the regulator valve 88a, the first pressure-actuated valve and the second pressure-actuated valve may be check valves. In the present example, each of the regulator valve 88a, the first pressure-actuated valve and the second pressure-actuated valve are check valves.

Referring to FIG. 10A, in an example, the integrated multifunctional valve device 88 may include a capillary relief valve 89 (FIGS. 11A-11C). In an example, the flexible disk member 94, the first seat member 95, the first housing member 98a, the second seat member 96 and the second port 93 form a capillary relief valve 89 corresponding to the open position of the regulator valve 88a. In examples, the second housing member 98b, the actuator ball 97a, the flexible disk member 94, the first seat member 95, the first housing member 98a, the second seat member 96, and the second port 93 form a capillary relief valve 89 corresponding to the open position of the regulator valve 88a. The capillary path 99 may be configured to selectively transport air from the second port 93 to the regulated chamber 12. In an example, the capillary path 99 selectively transports air from the second port 93 to the regulated chamber 12 based on a respective state 55 of the regulated chamber 12 such as the backpressure regulation state 55b (FIG. 11 B).

FIG. 11A, 11B and 11C are chart representational views illustrating states of the regulated chamber of the fluid container of FIG. 1 according to examples. In examples, the plurality of states 15 may be a combination of pressurization and depressurization states. Referring to FIGS. 11A-11C, in the present example, the states 55 (FIG. 7) include a hyperinflation priming and/or purging state 55a (FIG. 11A), a backpressure regulation state 55b (FIG. 11B), and a normal and/or altitude robust state 55c (FIG. 11C). In the hyperinflation priming and/or purging state 55a, the regulator unit 14 is configured to pressurize the regulated chamber 12 to a positive pressure to perform at least one of a priming function and a purging function, such that the wet flow valve 78b is closed. That is, the regulated chamber 12 has a greater pressure than the free-fluid chamber 13. Further, the regulator valve 88a is closed, the free-fluid valve 88b is closed, the vent valve 78a is closed, and a capillary relief valve 89 is closed.

Referring to FIGS. 10C and 11A, for example, in operation in the hyperinflation priming and/or purging state 55a, the regulator unit 14 expands to pressurize the regulated chamber 12 and, for example, to move a lever member 97b in a direction away from a respective port 93. The actuator ball 97a also moves away from the respective port 93. However, pressure within the regulated chamber 12 places a flexible disk member 94 into a closed port position and closes the wet flow valve 78b. That is, the flexible disk member 94 is urged toward and against the respective port 93 to cover it isolating the free-fluid chamber 13 from the regulated chamber 12. In an example, the capillary relief valve 89 is closed.

Referring to FIGS. 10A and 11B, in the backpressure regulation state 55b, the regulator unit 14 is configured to form a negative pressure in the regulated chamber 12 to perform a controlled fluid delivery function, such that the wet flow valve 78b is open, the regulator valve 88a is open, the free-fluid valve 88b is open, the vent valve 78a is open, and a capillary relief valve 89 is closed. That is, pressure in the regulated chamber 12 is less than pressure in the free-fluid chamber 13. For example, in operation in the backpressure regulation state 55b, back pressure expands the regulator unit 14 to pressurize the regulated chamber 12 and, for example, to move a lever member 97b in a direction away from the respective port 93. The actuator ball 97a also moves away from the respective port 93. The flexible disk member 94 is placed in an open port position and the wet flow valve 78b is placed into an open position. That is, air flows through the vent valve 78a and free-fluid valve 88b into the free-fluid chamber 13. Also, fluid flows from the free-fluid chamber 13 through the wet flow valve 78b into the regulated chamber 12. In an example, the capillary relief valve 89 is open. Thus, air does passes through the capillary relief valve 89 into the regulated chamber 12, for example, along a capillary path 99.

As illustrated in FIGS. 10B and 11C, in the normal and/or altitude robust state 55c, the regulator unit 14 is in a partially expanded state configured to form a negative pressure in the regulated chamber 12 to perform at least a leak prevention function, such that the wet flow valve 78b is open, the regulator valve 88a is closed, the free-fluid valve 88b is closed, the vent valve 78a is closed, and a capillary relief valve 89 is closed. For example, in operation in the normal and/or altitude robust state 55c, the regulator unit 14 partially expands. The flexible disk member 94 is urged against the respective port, for example, by the lever member 97b and/or actuator ball 97a, or the like. Thus, the flexible disk member 94 is placed in a closed port position restricting air from flowing into the free-fluid chamber 13 through the vent valve 78a and free-fluid valve 88b. The wet flow valve 78b is in an open position allowing fluid to flow into the regulated chamber 12 as the pressure in the regulated chamber 12 is less than the pressure in the free-fluid chamber 13. In an example, the capillary relief valve 89 is closed.

The present disclosure has been described using non-limiting detailed descriptions of examples thereof that are provided by way of example and are not intended to limit the scope of the present disclosure. It should be understood that features and/or operations described with respect to one example may be used with other examples and that not all examples of the present disclosure have all of the features and/or operations illustrated in a particular figure or described with respect to one of the examples. Variations of examples described will occur to persons of the art. Furthermore, the terms "comprise," "include," "have" and their conjugates, shall mean, when used in the disclosure and/or claims, "including but not necessarily limited to."

It is noted that some of the above described examples that are illustrative and therefore may include structure, acts or details of structures and acts that may not be essential to the present disclosure and which are described as examples. Therefore, the scope of the present disclosure is limited only by the claims.

## Claims

1. A removable inkjet cartridge (10) usable with an image forming apparatus having a fluid container receiver (61), the fluid container (10) comprising:
a housing unit (11);
a free-fluid chamber (13) disposed within the housing unit (11) and configured to store ink;
a regulated chamber (12) disposed within the housing unit (11) and configured to store ink, the regulated chamber (12) including a regulator unit (14) configured to regulate a pressure of the ink in the regulated chamber (12) and an outlet (16) configured to transport the ink from the regulated chamber (12) to outside of the housing unit (11);
a vent check valve (78a) configured to selectively transport air between ambient atmosphere and the free-fluid chamber (13); and
a wet flow check valve (18b, 78b) configured to selectively transport ink from the free-fluid chamber (13) to the regulated chamber (12), wherein the wet flow check valve (18b, 78b) is configured to selectively transport the ink from the free-fluid chamber (13) to the regulated chamber (12) in response to a pressure differential therebetween, wherein the wet flow check valve (18b, 78b) is in an open state when pressure in the free-fluid chamber (13) is greater than pressure in the regulate chamber 12); and
wherein the wet flow check valve (18b, 78b) is configured to transport the ink in response to the transport of the ink through the outlet (16) to the outside of the housing unit (11), and the vent check valve (18a) is configured to transport the air into the free-fluid chamber (13) in response to the transport of the ink into the regulated chamber (12).

2. The inkjet cartridge (10) according to claim 1, wherein the free-fluid chamber (13) and the regulated chamber (12) are adjacent to each other and separated by a common wall.

3. The inkjet cartridge (10) according to claim 2, wherein at least one of the vent check valve (18a) and the wet flow check valve (18b, 78b) are disposed at the common wall such that the wet flow check valve (18b, 78b) is disposed below the vent check valve (18a) by a predetermined distance in a gravitational direction when the inkjet cartridge (10) is inserted in the fluid container receiver (61) of the image forming apparatus.

4. The inkjet cartridge (10) according to claim 1, further comprising:
an installed state, in which the inkjet cartridge (10) is inserted in the fluid container receiver (61) of the image forming apparatus,
wherein the housing unit (11) is configured to be received by the fluid container receiver (61) such that a floor portion of the regulated chamber (12) is sloped to direct the ink in the free-fluid chamber (13) toward the check valve (18b).

5. The inkjet cartridge (10) according to claim 1, wherein the free-fluid chamber (13) reaches a respective exhaustion state in which a predetermined amount of the ink has been depleted from the free-fluid chamber before the regulated chamber (12) reaches the respective exhaustion state in which a predetermined amount of the ink has been depleted from the regulated chamber through passive sequencing therein.

## Patentansprüche

1. Abnehmbare Tintenstrahlkartusche (10), verwendbar mit einer bilderzeugenden Vorrichtung, die einen Fluidbehälterempfänger (61) aufweist, wobei der Fluidbehälter (10) Folgendes umfasst:
eine Gehäuseeinheit (11);
eine Freifluidkammer (13), die in der Gehäuseeinheit (11) angeordnet ist und konfiguriert ist, Tinte zu speichern;
eine geregelte Kammer (12), die in der Gehäuseeinheit (11) angeordnet ist und konfiguriert ist, Tinte zu speichern, wobei die geregelte Kammer (12) Folgendes enthält: eine Reglereinheit (14), die konfiguriert ist, einen Druck der Tinte in der geregelten Kammer (12) zu regulieren, und einen Austritt (16), der konfiguriert ist, die Tinte von der geregelten Kammer (12) in das Äußere der Gehäuseeinheit (11) zu transportieren;
ein Entlüftungsrückschlagventil (78a), das konfiguriert ist, selektiv Luft zwischen einer Umgebungsatmosphäre und der Freifluidkammer (13) zu transportieren; und
ein Nassstromrückschlagventil (18b, 78b), das konfiguriert ist, selektiv Tinte von der Freifluidkammer (13) in die regulierte Kammer (12) zu transportieren, wobei das Nassstromrückschlagventil (18b, 78b) konfiguriert ist, selektiv die Tinte von der Freifluidkammer (13) in die regulierte Kammer (12) zu transportieren, als Reaktion auf eine Druckdifferenz dazwischen, wobei das Nassstromrückschlagventil (18b, 78b) sich in einem offenen Zustand befindet, wenn ein Druck in der Freifluidkammer (13) größer ist als ein Druck in der regulierten Kammer (12); und
wobei das Nassstromrückschlagventil (18b, 78b) konfiguriert ist, die Tinte als Reaktion auf das Transportieren der Tinte durch den Austritt (16) in das Äußere der Gehäuseeinheit (11) zu transportieren und das Entlüftungsrückschlagventil (18a) konfiguriert ist, die Luft als Reaktion auf das Transportieren der Tinte in die geregelte Kammer (12) in die Freifluidkammer (13) zu transportieren.

2. Tintenstrahlkartusche (10) nach Anspruch 1, wobei die Freifluidkammer (13) und die geregelte Kammer (12) einander benachbart und durch eine gemeinsame Wand getrennt sind.

3. Tintenstrahlkartusche (10) nach Anspruch 2, wobei das Entlüftungsrückschlagventil (18a) und/oder das Nassstromrückschlagventil (18b, 78b) derart an der gemeinsamen Wand angeordnet sind, dass das Nassstromrückschlagventil (18b, 78b) um einen vorgegebenen Abstand in einer Gravitationsrichtung unter dem Entlüftungsrückschlagventil (18a) angeordnet ist, wenn die Tintenstrahlkartusche (10) im Fluidbehälterempfänger (61) der bilderzeugenden Vorrichtung eingeführt ist.

4. Tintenstrahlkartusche (10) nach Anspruch 1, ferner Folgendes umfassend:
einen installierten Zustand, in dem die Tintenstrahlkartusche (10) in dem Fluidbehälterempfänger (61) der bilderzeugenden Vorrichtung eingeführt ist,
wobei die Gehäuseeinheit (11) konfiguriert ist, durch den Fluidbehälterempfänger (61) derart aufgenommen zu werden, dass ein Bodenabschnitt der regulierten Kammer (12) geneigt ist, um die Tinte in der Freifluidkammer (13) zum Rückschlagventil (18b) hin zu leiten.

5. Tintenstrahlkartusche (10) nach Anspruch 1, wobei die Freifluidkammer (13) einen entsprechenden Erschöpfungszustand erreicht, in dem eine vorgegebene Menge der Tinte von der Freifluidkammer aufgebraucht worden ist, bevor die regulierte Kammer (12) den entsprechenden Erschöpfungszustand erreicht, in dem eine vorgegebene Menge der Tinte von der regulierten Kammer durch passives Sequenzieren darin aufgebraucht worden ist.

## Revendications

1. Cartouche jet d'encre amovible (10) utilisable avec un appareil de formation d'image présentant un logement pour contenant de fluide (61), le contenant de fluide (10) comprenant :
un boîtier (11) ;
une chambre de fluide libre (13) disposée à l'intérieur du boîtier (11) et configurée pour stocker l'encre ;
une chambre régulée (12) disposée à l'intérieur du boîtier (11) et configurée pour stocker l'encre, la chambre régulée (12) comprenant une unité régulatrice (14) configurée pour réguler une pression de l'encre dans la chambre régulée (12) et une sortie (16) configurée pour transporter l'encre depuis la chambre régulée (12) vers l'extérieur du boîtier (11) ;
un clapet anti-retour d'aération (78a) configuré pour transporter sélectivement l'air entre l'atmosphère ambiante et la chambre de fluide libre (13) ; et
un clapet anti-retour d'écoulement fluide (18b, 78b) configuré pour transporter sélectivement l'encre entre la chambre de fluide libre (13) et la chambre régulée (12), dans laquelle le clapet anti-retour d'écoulement fluide (18b, 78b) est configuré pour transporter sélectivement l'encre entre la chambre de fluide libre (13) et la chambre régulée (12) en réponse à un différentiel de pression entre ces dernières, dans laquelle le clapet anti-retour d'écoulement fluide (18b, 78b) est dans un état ouvert lorsque la pression dans la chambre de fluide libre (13) est supérieure à la pression dans la chambre régulée (12) ; et
dans laquelle le clapet anti-retour d'écoulement fluide (18b, 78b) est configuré pour transporter l'encre en réponse au transport de l'encre à travers la sortie (16) vers l'extérieur du boîtier (11), et le clapet anti-retour d'aération (18a) est configuré pour transporter l'air dans la chambre de fluide libre (13) en réponse au transport de l'encre dans la chambre régulée (12).

2. Cartouche jet d'encre (10) selon la revendication 1, dans laquelle la chambre de fluide libre (13) et la chambre régulée (12) sont adjacentes l'une de l'autre et séparées par une paroi commune.

3. Cartouche jet d'encre (10) selon la revendication 2, dans laquelle le clapet anti-retour d'aération (18a) et/ou le clapet anti-retour d'écoulement fluide (18b, 78b) est/sont disposé(s) au niveau de la paroi commune de sorte que le clapet anti-retour d'écoulement fluide (18b, 78b) soit disposé sous le clapet anti-retour d'aération (18a) selon une distance prédéterminée dans un sens gravitationnel lorsque la cartouche jet d'encre (10) est insérée dans le logement pour contenant de fluide (61) de l'appareil de formation d'image.

4. Cartouche jet d'encre (10) selon la revendication 1, comprenant en outre :
un état installé, dans lequel la cartouche jet d'encre (10) est insérée dans le logement pour contenant de fluide (61) de l'appareil de formation d'image,
dans laquelle le boîtier (11) est configuré pour être reçu par le logement pour contenant de fluide (61) de sorte qu'une partie de fond de la chambre régulée (12) soit inclinée pour diriger l'encre dans la chambre de fluide libre (13) vers le clapet anti-retour (18b).

5. Cartouche jet d'encre (10) selon la revendication 1, dans laquelle la chambre de fluide libre (13) atteint un état d'épuisement respectif dans lequel une quantité prédéterminée de l'encre a été épuisée dans la chambre de fluide libre avant que la chambre régulée (12) atteigne l'état d'épuisement respectif dans lequel une quantité prédéterminée de l'encre a été épuisée dans la chambre de fluide libre par un séquençage passif à l'intérieur de cette dernière.
